# EUROPEAN PATENT APPLICATION

(11) **EP 3 085 218 A1**
(43) Date of publication of application: **26.10.2016**
(21) Application number: 16166350.5
(22) Date of filing: 21.04.2016
(51) Int. Cl.: A01B 73/04, A01C 7/20

(54) **A SEEDER**

(30) Priority: 24.04.2015 IT RE20150035
(71) Applicant: Matermacc S.p.A., 33078 San Vito al Tagliamento (PN) (IT)
(72) Inventor: Bedosti, Andrea, 40065 Bologna (IT); Zubelli, Massimo, 42044 Gualtieri (RE) (IT); Trivillin, Michele, 33078 San Vito al Tagliamento (PN) (IT)
(74) Representative: Corradini, Corrado

(57) **Abstract**

A seeder (10) comprising:
- a support bar (20),
- at least a first seeding unit (31) associated to the support bar (20),
- an extension bar (25) of the support bar (20), rotatably associated to the support bar (20) with respect to an oscillating axis (B) and mobile between a raised position, in which it is substantially perpendicular to the support bar (20), and a lowered position in which it is substantially parallel to the support bar (20) so as to axially prolong the support bar, and
- at least a second seeding unit (32) fixed solidly to the extension bar (25) and mobile therewith between the raised position and the lowered position.

## Description

### TECHNICAL FIELD

The present invention relates to a seeder, more in particular a precision pneumatic seeder able to be transported by a motorised drawing vehicle, such as an agricultural tractor.

### PRIOR ART

Seeders, especially seeders which must be transported by an agricultural vehicle, have the double requirement of having a small transversal dimension, so as not to encumber a road beyond what is admitted by the road laws, and at the same time having a large seeding width during the seeding operations on the terrain.

To attain this double aim two types of seeders are known, having foldable frames, which have a fixed central support bar to which two extension bars are hinged, which can be activated by respective hydraulic cylinders between a lowered position, in which they axially extend the support bar, and a raised position, in which the extension bars are contained within the axial volume of the support bar.

A first type of these folding-frame seeders, for example as described in German patent no.DE 43 03 101, has the extension bars hinged to the support bar by means of a four-bar hinge which enables translation, substantially parallel to themselves, in which each extension bar is substantially superposed, parallel and distanced from the support bar, and the lowered position, in which each extension bar is substantially aligned and parallel to the support bar and extends it axially.

A plurality of seeding units is fixed to the support bar and each extension bar, equidistant from one another by means of attachment flanges bolted to the relative bars.

A second type of these folding-frame seeders, for example as described in patents no.US 2012/316673 and no. EP 1 782 669, has the extension bar hinged to the ends of the support bar by means of a simple hinge which enables rotation between the raised position, in which each extension bar is arranged substantially vertical with the free end facing upwards, and the lowered position, in which each extension bar is substantially aligned and parallel to the support bar and extends it axially.

In this case the seeder can comprise a plurality of seeding units, each slidably associated to the support bar and the extension bars, and commanded so as to vary the reciprocal distance thereof, between a contracted position, in which they are all contained within the axial volume of the support bar when the extension bars are in the raised position, and are then distributed substantially equidistant along the extension bars and the support bar, when the extension bars are in the lowered position.

In the first type of known seeders, the number of seeding units can be high, while in the second type the number of the seeding units is limited to those that can be arranged within the axial volume of the support bar.

Further, both the first and the second type of seeder, though both being a good compromise in terms of minimum volume of the vehicle wheel gauge and maximum volume of the operating width during the working phase, however exhibit the drawback of requiring complicated and expensive lever mechanisms and actuators for synchronising and moving the extension bars and/or the seeding units.

Further, a drawback encountered in the second type of seeder lies in the fact that when the seeding units are fixed to the respective extension bars and the bars are brought into the raised position, the extension bars being hinged to the ends of the support bar, the seeding units project externally with respect to the axial volume of the support bar and therefore, though raised from the ground, broaden the overall volume of the seeder when being transported by road.

An aim of the present invention is to obviate the above-mentioned drawbacks of the prior art, with a solution that is simple, rational and relatively inexpensive.

The aims are attained by the characteristics of the invention as reported in the independent claim. The dependent claims delineate preferred and/or particularly advantageous aspects of the invention.

### DESCRIPTION OF THE INVENTION

In particular, the invention discloses a seeder comprising:
- a support bar,
- at least a first seeding unit associated to the support bar,
- an extension bar of the support bar, rotatably associated to the support bar with respect to a (single) oscillating axis and mobile between a raised position, in which it is substantially perpendicular to the support bar, and a lowered position in which it is substantially parallel to the support bar so as to axially prolong the support bar, and
- at least a second seeding unit fixed solidly to the extension bar and mobile therewith between the raised position and the lowered position.

With this solution, the folding-frame seeder is particularly versatile, simple and economical, and does not require particular lever mechanisms and/or actuation mechanisms for movement of the extension bars.

The oscillating axis of the extension bar can advantageously be located in an offset position of the support bar in a median zone of the support bar closer to the centre (of the support bar) than to the respective end of the support bar, i.e. the end prolonged by the extension bar.

With this solution, differently from what is disclosed for the known seeders of documents US 2012/316673 and EP 1 782 669, when the extension bar is in the raised position and the second seeding unit fixed to the extension bar (which when in the lowered position projects downwards with respect to the extension bar and when in the raised position projects laterally with respect to the respective support bar) does not project beyond the axial size of the support bar.

For the same aims, the rotation axis of each extension bar is located at a distance from the respective end (axially extended by the extension bar in the lowered position thereof) of the support bar substantially equal to the distance from the ground of the extension bar in the lowered position thereof, or in any case of the support bar (or in other words equal to the distance between the end of the second seeding unit distal from the extension bar able to contact the ground and the extension bar itself).

In an aspect of the invention, the second seeding unit can comprise at least an engaging portion able to define a sliding connection with the extension bar and to be blocked in an axial position of the extension bar by means of fixing organs.

With this solution, the connection between the extension bar and the second seeding unit can be made particularly stable and rigid, even during the movement of the extension bar between the lowered position and the raised position, as well as during the working steps, when the extension bar is in the lowered position, and during the movements when at rest, in which the vehicle transports the seeder with the extension bar in the raised position.

Further, note that thanks to the connection between the second seeding unit and the extension bar the second seeding unit undergoes smaller, even no, vibrations with respect to the extension bar, thus enabling an increase in the vehicle driver's comfort, in each working and transport step.

The engaging portion can advantageously comprise an attachment flange rigidly associated to the seeding unit and a substantially C-shaped rigid tie rod that is adjustably fixed by means of the fixing organs to the attachment flange so as to define a ring-closed profile with the attachment flange, which is able to insert on the extension bar and tighten thereon so as to axially block the second seeding unit in a defined axial position of the extension bar.

Thanks to this it is possible and simple to regulate the position of the second seeding unit along the extension bar and solidly block the second seeding unit in position.

In a further aspect of the invention, the second seeding unit can comprise a tank, for example substantially sealed by a cover, able to contain seeds to be sown on the terrain and a dispensing group, for example of the type illustrated in patent EP 0536543 belonging to the same Applicant, which is incorporated herein for reference, for dispensing a batched quantity of seeds on the terrain, for example one seed at a time, and which sources from the tank.

With this solution, the seeder can be extremely precise and efficient in seeding operations.

Further, with the tank closed and sealed, when the second seeding unit is in the raised position, it does not release its content, though being in fact upturned.

The second seeding unit can comprise a coulter element, for example a disc or harrow-shaped coulter, located upstream of the fall point of the batched quantity of the seeds in the advancement direction of the seeder on a terrain to be seeded and/or a closing group, for example a pair of rotating and inclined discs, able to close a furrow, which closing group is located downstream of the fall point of the batched quantity of the seed in the advancement direction of the seeder on the seeded terrain.

Still more advantageously, the second seeding unit can comprise at least a depth wheel, for example having a height (i.e. depth) that is adjustable, which defines the depth of the seeding.

The seeder preferably comprises a pair of the extension bars, for example counter-rotating, and able each to axially prolong a respective end of the support bar.

In this way the size of the seeder's span, in the working position, is increased.

In another advantageous aspect of the invention, the extension bars can be moved alternatively between the lowered position and the raised position by at least an actuator, for example a single actuator.

With this solution a functional, simple and economical seeder can be obtained.

Also, a plurality of first seeding units can be solidly fixed to the support bar, distanced from one another along the longitudinal axis of the support bar, which for example are equidistant by an equal step to the step that separates the second seeding unit from the proximal first seeding unit.

The first seeding units can also be identical to the second seeding units.

Further, the extension bars can be fixed, as described in the foregoing, a plurality of second seeding units, for example equidistant from one another.

### BRIEF DESCRIPTION OF THE DRAWINGS

Further characteristics and advantages of the invention will emerge from a reading of the following description, provided by way of non-limiting example with the aid of the figures illustrated in the appended tables of drawings.
Figure 1 is an axonometric rear view of the seeder of the invention, with the extension bars in the lowered position.
Figure 2 is an axonometric rear view of the seeder of figure 1, with the extension bars in the raised position.
Figure 3 is a rear frontal view of figure 1.
Figure 4 is a rear frontal view of figure 2.
Figure 5 is a lateral view from the left of figure 1.
Figure 6 is a lateral view from the left of figure 2.
Figure 7 is a view from above of figure 1.
Figure 8 is a view from above of figure 2.
Figure 9 is a rear frontal view of the seeder of figure 1 (and figure 2 in a broken line without the seeding units.

### BEST WAY OF CARRYING OUT THE INVENTION

With particular reference to the figures, reference numeral 10 denotes in its entirety a seeder, for example a precision pneumatic seeder.

The seeder 10 comprises a frame 11, for example comprising a rigid metal longitudinal member arranged horizontally, to which a pair of wheels 12 are connected (with a rotation axis parallel to the frame 11) which enable support and movement of the seeder 10.

The frame 11, for example, is realised by at least a longitudinal member, in the example two parallel metal longitudinal members (a front and a back one) fixed to one another by means of transversal brackets.

The frame 11 can be associated, as is known to the technical expert in the sector, posteriorly of an agricultural vehicle, for example a tractor, so as to be advanceable along an advancement direction A for seeding a terrain.

A manure-spreading tank 13 can be fixed to the frame 11, for example superiorly thereof, which tank 13 is provided with lower nozzles from which a manure-spreader group 14, for example of pneumatic type, collects a batched quantity of manure to be spread on the terrain during the advancement of the seeder 10 along the advancement direction A.

At the lateral ends of the frame 11 two row breakers 15 can be hinged, for example hydraulic and mobile between a lowered position and a raised position, as known to the technical expert in the sector.

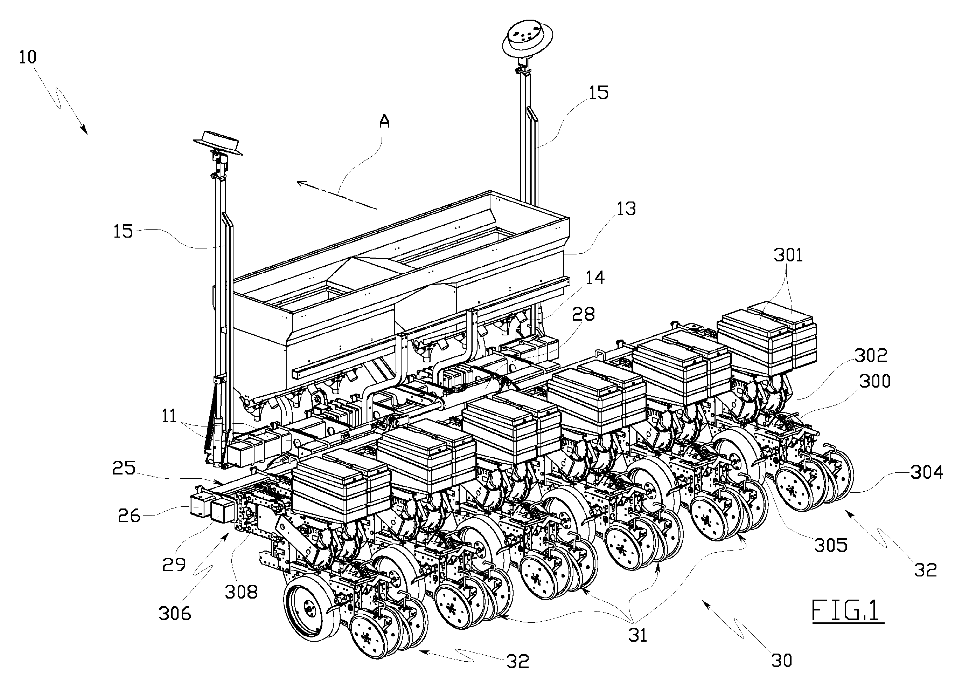

Posteriorly of the frame 11 relatively to the advancement direction indicated by arrow A of figure 1, the seeder 10 comprises a support bar 20, for example also defined by a rigid metal longitudinal member (having a square section), for example parallel to the frame 11, and therefore perpendicular to the advancement direction A of the seeder 10.

The support bar 20 is solidly fixed to the frame 11, for example at a distance therefrom by use of spacer elements, by means of two threaded organs, such as two bolts 21 inserted in two sleeves 22 defining the spacer elements.

The threaded organs, for example, pass through two respective transversal through-holes made in the support bar 20 and are substantially equidistant from the median axis (vertical) of the support bar.

Further, the support bar 20 is connected to the frame 11 by means of rigidly bolted transversal brackets (not illustrated).

The seeder 10 further comprises a pair of extension bars 25, each of which is configured for axially prolonging a free end of the support bar 20.

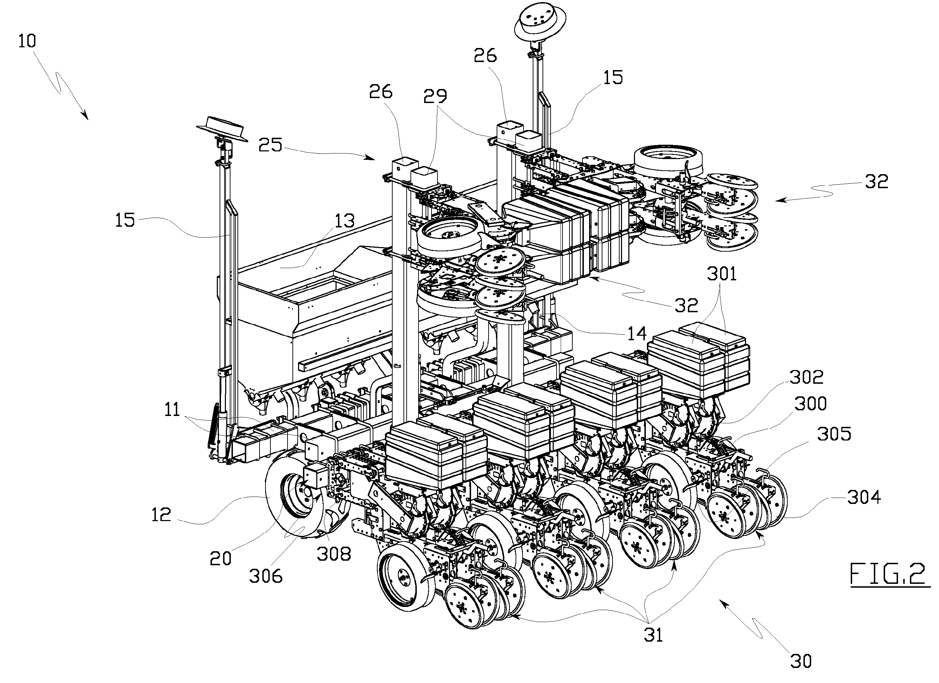

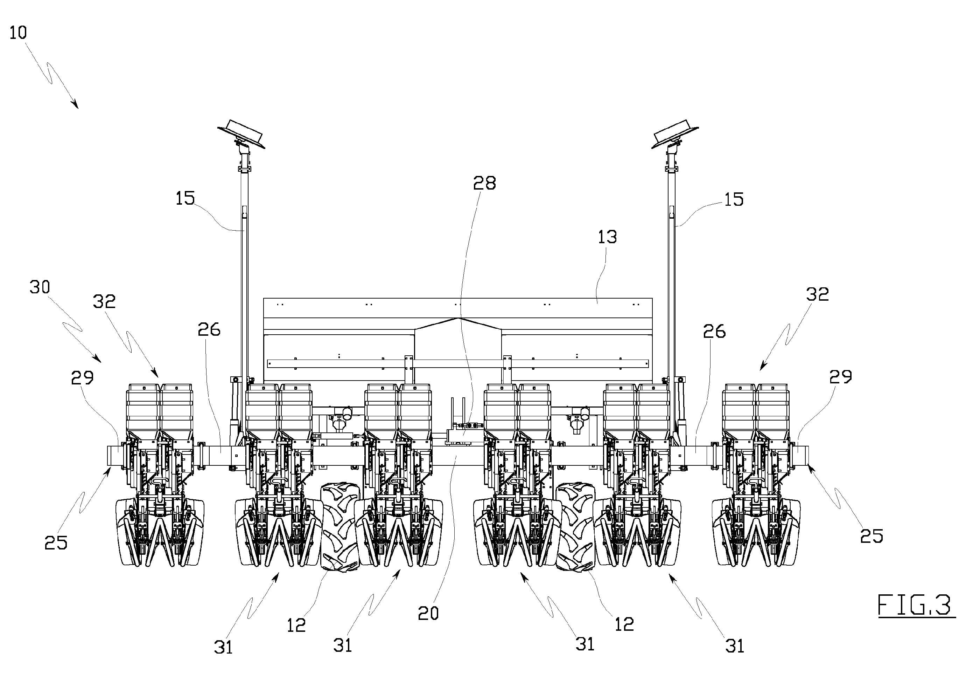

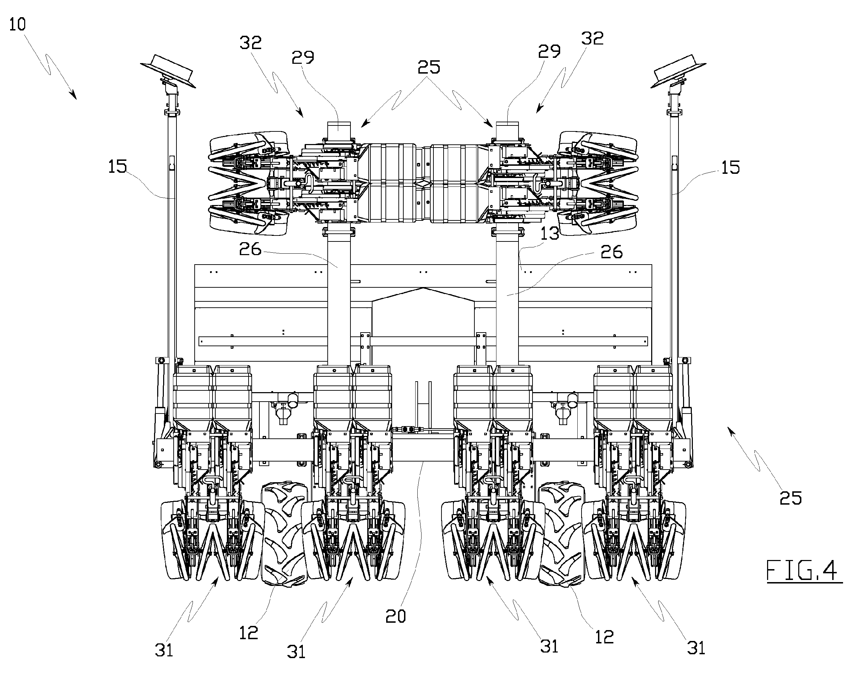

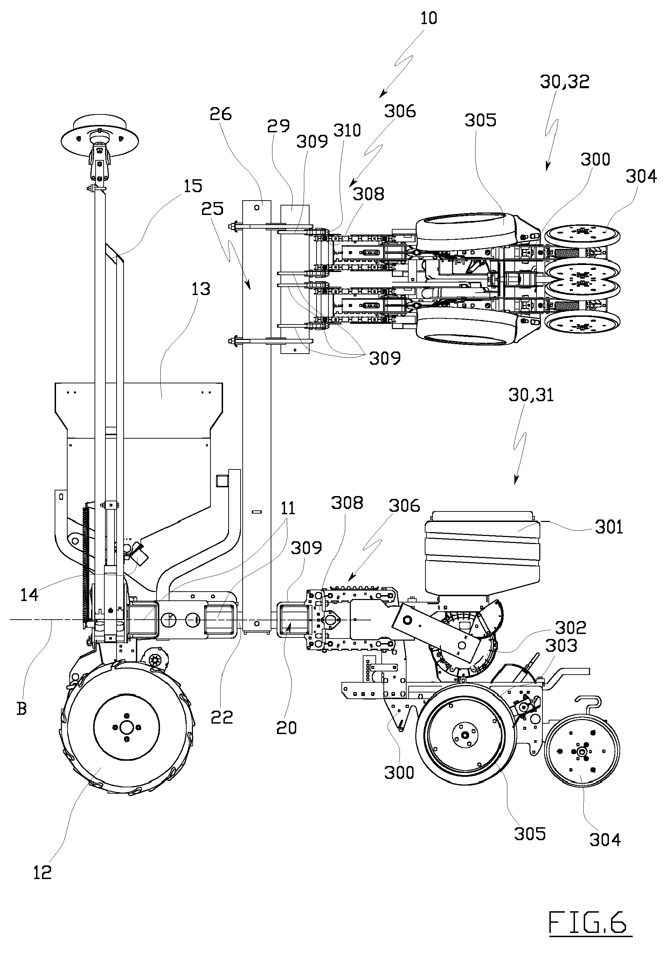

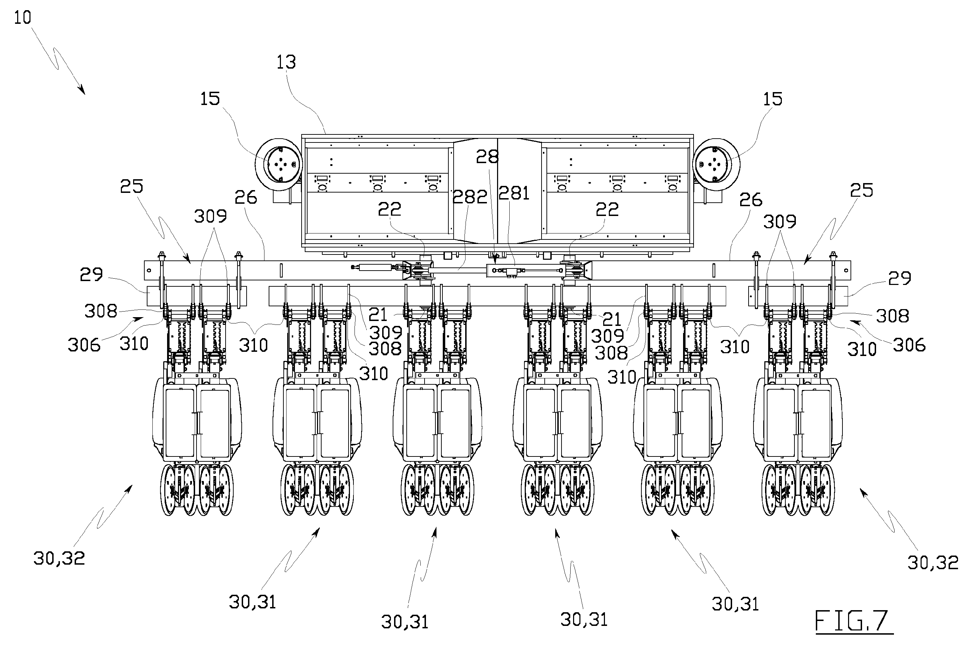

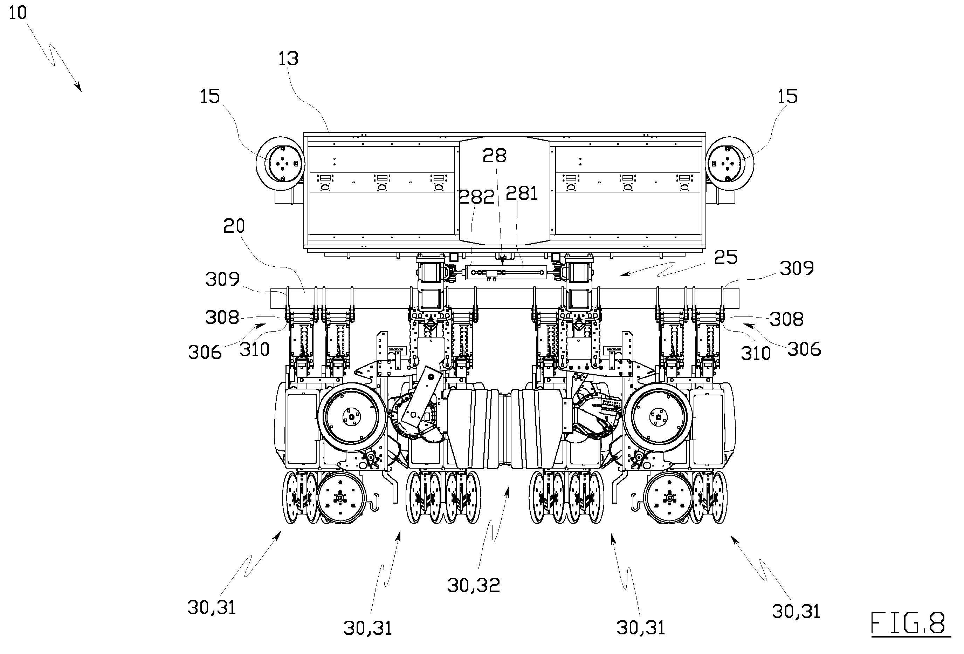

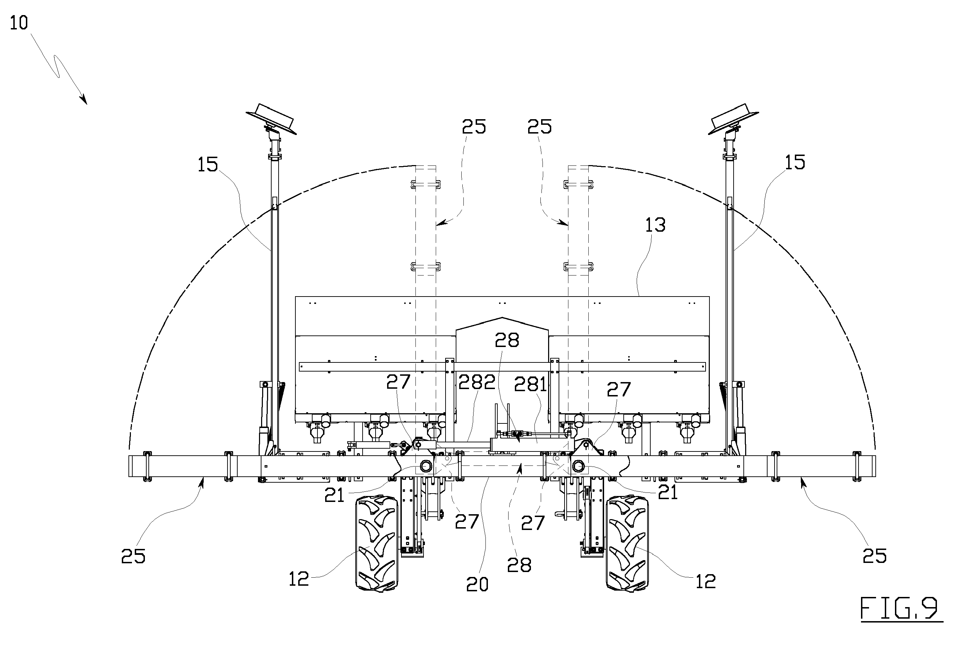

Each extension bar 25 comprises a first longitudinal member 26, for example made of metal, which is hinged - for example at an end thereof - to the support bar 20, so as to be able to oscillate relative to a (single) oscillating axis B (parallel to the advancement direction A) between a raised position, in which it is substantially perpendicular to the support bar 20, for example vertical with the free end facing upwards (see figures 2,4,6,8 and the broken line of figure 9), and a lowered position in which it is substantially parallel to the support bar 20 (see figures 1,3,5,7 and 9). For example, the extension bars 25 in the lowered position rest on the bolted transversal brackets which connect the frame 11 with the support bar 20, which maintain it in the horizontal position.

Each oscillating axis B, for example, is located in a position that while offset is substantially central to the support bar 20, for example with respect to the vertical median plane thereof. In particular, each oscillating axis (B) is located in an offset position of the support bar 20 closer to the centre than to the respective end of the support bar.

In greater detail, the oscillating axes B, being equidistant from the vertical median plane of the support bar 20, are arranged for example at a shorter distance than the distance between the wheels 12 or in any case shorter than the wheel gauge of the drawing vehicle.

The length of the extension bar 25, i.e. of the first longitudinal member 26, is such that the distance from the hinge point to the free end thereof is greater than the distance between the hinge point and the proximal free end of the support bar 20, so that when the extension bar 25 is in the lowered position it can axially extend the support bar 20.

The first longitudinal member 26, for example, has a cylindrical through-hole at the end thereof hinged to the support bar 20, which can be inserted on the sleeve 22 which therefore defines the oscillating pin of the first longitudinal member 26 with respect to the support bar 20. In practice the first longitudinal member 26 is commanded to oscillate alternatively between the lowered position and the raised position, in a space defined between the frame 10 and the support bar 20, frontally thereto in the advancement direction defined by the advancement direction A.

At least an actuator 28 is hinged to the pair of first longitudinal members 26 (and therefore to the pair of extension bars 25), preferably a single actuator 28, for example a hydraulic linear actuator.

The actuator 28, for example, comprises a cylinder 281 in which a stem 282 slides between a contracted position, in which the stem 282 is substantially contained in the cylinder 281, and an extended position, in which the stem 282 extends externally of the cylinder 281.

Each first longitudinal member 26 comprises a salient lug 27, for example realised in proximity of the end hinged to the support bar 20 thereof.

The end of the cylinder 281 and respectively the end of the stem 282 are hinged respective to the lugs 27 of the first longitudinal members 26, so that the activation of the actuator 28 between the extended position and the contracted position leads to the activation of the first longitudinal member 26, i.e. the extension bar 25, respectively between the lowered position and the raised position.

The actuator 28 is activated by a hydraulic circuit, not illustrated, commanded by the drawing vehicle (also not illustrated).

Each first longitudinal member 26 comprises at least an axial portion proximal to the free end, i.e. the axial portion that projects from the support bar 20 when the extension bar 25 is in the lowered position, which extends axially and is axially aligned with the support bar.

In the illustrated example, each extension bar 25 comprises, in the example, a second longitudinal member 29, which is fixed parallel to the first longitudinal member 26 (for example also made of metal and maintained substantially at a distance from the first longitudinal member by fixing straps and spacers), at the axial portion which projects from the first longitudinal member 26 when the extension bar 25 is in the lowered position.

In practice the second longitudinal member 29 can be aligned axially to the support bar 20 and axially extends it when the extension bar 25 is placed in the lowered position.

The seeder 10 comprises a plurality of seeding units 30, for example identical to one another, which in the present description are distinguished only by the position they are installed in.

In particular, the seeder 10 comprises a plurality of first seeding units 31 that are fixed to the support bar 20 and a second plurality of second seeding units 32 that are fixed to the extension bars 25.

In the example illustrated in the figures, four first seeding units 31 are illustrated, arranged along the longitudinal axis of the support bar 20, for example equistant to one another by a predefined step, and one second seeding unit 32 fixed to each extension bar 25, as will be more fully described in the following.

Each seeding unit 30 (i.e. each first seeding unit 31 and each second seeding unit 32) comprises a substantially rigid chassis 300, for example made of metal, which can support a respective tank 301, in which a plurality of seeds to be dispensed onto the ground are contained.

The tank 301 is for example closed, for example by an upper cover that is substantially sealed, and has a lower outlet mouth, for example tubular.

A dispensing group 302 is also mounted on the chassis 300, which is connected to the tank 301 (to the outlet mouth thereof) and is able to dispense a batched quantity of seeds, for example one seed at a time. The dispensing group 302, for example, is a precision pneumatic seeding device, which is realised preferably as described in document EP 0536543, referred to herein in its entirety.

The precision seeding device (not illustrated herein in its internal details) comprises a holed disc, having a plurality of circular holes, which wheel rotates and cooperates on one side with an air aspirating device (not illustrated), which creates a depression through the holes of the disc, keeping the seeds adherent to the disc up to a release zone, and on the other side with a mechanical selector, which facilitates selection of a single seed.

The dispensing group 302 is further such as to define the distance between the seeds dispensed along the advancement direction as a function of the advancement velocity of the seeder 10. The rotating disc might take its power from the wheels 12a of the seeder 10, as is known to the technical expert in the sector, or from other motion transforming means.

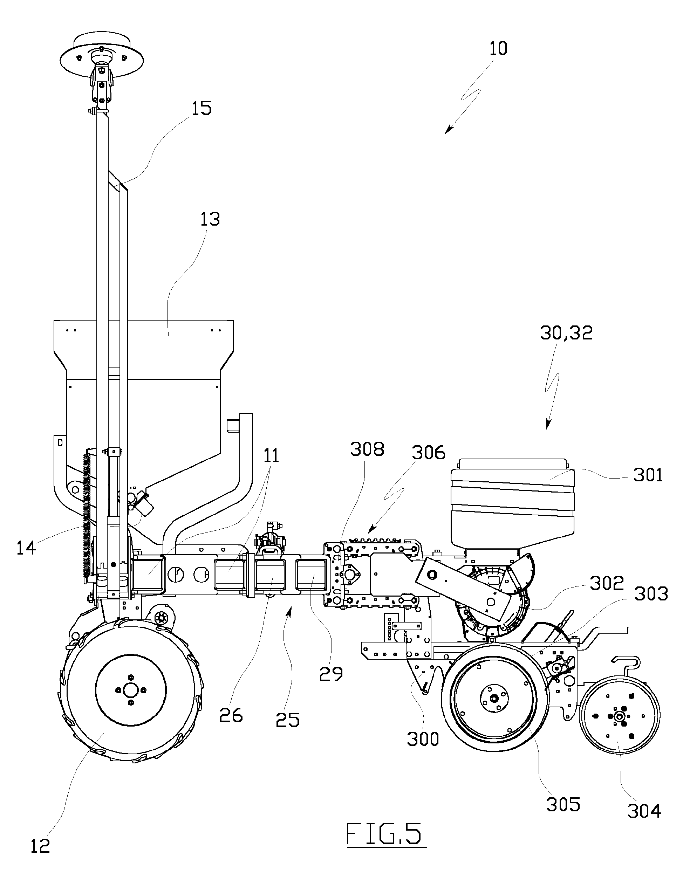

The chassis 300 also supports a coulter element 303, for example of a disc or double-disc type (as illustrated in figure 5) or harrow-shaped, which is fixed to the chassis 300. For example, the coulter element 303 is located inferiorly of the chassis 300, so as to go into contact with the terrain, and is positioned upstream of the fall point of the seed dispensed by the dispensing group 302 in the advancement direction of the seeder 10 along the advancement direction A.

The chassis 300 also supports a closing group 304 of the furrow realised in the terrain by the coulter element 303, which is for example regulatably fixed, for example adjustable in height, to the chassis and is positioned downstream of the fall point of the seed in the advancement direction of the seeder 10 along the advancement direction A.

The closing group 304 comprises, for example, a plurality of rotating discs inclined to one another and having a rotation axis that is inclined with respect to the horizontal.

Also, the chassis 300 rotatably supports at least a depth wheel 305, which is positioned upstream of the closing group 304 along an axis parallel to the advancement direction A.

Each seeding unit 30 in the example has two tanks 301, two dispensing groups 302, two coulter elements 303, two closing groups 304 and two (pairs of) depth wheels 305 flanked to one another along a direction perpendicular to the advancement direction A, i.e. along the longitudinal axis of the support bar 20 and/or the extension bar 25 to which they are fixed.

Each chassis 300 of each seeding unit 30, i.e. each first seeding unit 31 and each second seeding unit 32, comprises, in the front zone thereof, in relation to the advancement direction A, at least an engaging portion 306 configured for defining a stable attachment to the respective bar, i.e. the support bar 20 and/or the extension bar 25.

In particular, for the purposes of the present invention, each seeding unit 30 is solidly constrained to the respective support bar 30 and/or extension bar 25.

In the example, each seeding unit 30 has at least a pair (in the example four) engaging portions 306 flanked (and spaced) along a direction perpendicular to the advancement direction A, i.e. along the axis of the support bar 20 and/or the extension bar 25 to which they are fixed.

Each engaging portion 306 comprises an attachment flange 308, which for example is fixed (for example solidly or oscillatingly by means of damping organs) to the chassis 300, for example by means of two rigid brackets (appropriately blocked and/or damped).

The attachment flange 308 defines for example a flat surface (substantially vertical) able to go to rest on a posterior surface of the support bar 20 and/or of the extension bar 25, substantially meeting with it.

The attachment flange 308 has a greater height that the vertical thickness of the support bar 20 and/or of the extension bar 25, so as to be able to define two projecting portions, above and below it, when the flat surface is in contact with the rear surface of the bars.

The engaging portion 306 also comprises a rigid tie rod 309, substantially C-shaped, with a concavity facing posteriorly with respect to the advancement direction A, which tie rod 309 is fixed in an adjustable way to the attachment flange 308, for example at through-holes (vertically aligned) and made on the projecting portions thereof, so that the rigid tie rod 309, once connected to the attachment flange 308, can define, together therewith, a ring-closed profile.

The C shape of the rigid tie rod 309 is substantially complementary to the external section of the support bar 20 and/or the extension bar 25 (in particular the second longitudinal member 29), so as to be able to enter into contact with the lower, upper and front surface of the support bar 20 and/or the extension bar 25 (in particular the second longitudinal member 29).

In practice, the rigid tie rod 309 is provided with threaded fixing organs 310, for example at the free ends thereof, such as to be able to regulate the size of the ring (substantially quadrangular) defined between the attachment flange 308 and the rigid tie rod 309.

The engaging portion 36 of each seeding unit 30 is in practice such as to be able to define a sliding connection with the extension bar 25 and is such as to be able to be blocked in an axial position of the extension bar 25 and/or the support bar 20 by means of a tightening of fixing organs (310).

In practice, the extension bar 25, for example the second longitudinal member 29 thereof, is insertable in the ring defined by the attachment flange 308 and the rigid tie rod 309 of a second seeding unit 32 (preferably following the opening of the ring obtained by temporarily removing the rigid tie rod 309 from its engagement with the attachment flange 308) and thereafter - once the desired regulated position of the second seeding unit 32 along the extension bar 25 has been decided - the rigid tie rod 309 can be tightened, by activating the fixing organs 310 on the extension bar 25, for example on the second longitudinal member 29 thereof, in order to enable the axial blocking of the second seeding unit 32 in a defined axial position of the extension bar.

In this way each second seeding unit 32 is solidly constrained to the respective extension bar 25, so as to be able to oscillate therewith when the actuator 28 commands the oscillation of the extension bar 25 between the lowered position and the raised position.

Further, the support bar 20 is insertable in the ring defined by the attachment flange 308 and the rigid tie rod 309 of a first seeding unit 31 (preferably following the opening of the ring obtained by temporarily removing the rigid tie rod 309 from its engagement with the attachment flange 308) and thereafter - once the desired regulated position of the first seeding unit 309 along the support bar 20 has been decided - the rigid tie rod 309 can be tightened, by activating the fixing organs 310, on the support bar 20, in order to enable the axial blocking of the first seeding unit 31 in a defined axial position of the support bar 20.

With the mechanical connection between the support bar 20 and/or the extension bar 25 and the engaging portions 36 of the seeding unit 30, it is possible to limit and/or eliminate any undesired movement or vibration of the seeding unit.

Further, the above-mentioned mechanical connection also lends itself to regulating the step between the various seeding units 30 in a simple, intuitive, economic and relatively rapid way.

In practice, when the seeder 10 is working on the terrain to be seeded and it is transported along the advancement direction A by the drawing vehicle, the extension bars 25 are brought by the actuator 28 into the lowered position (see figures 1,3,5,7 and 9).

In this configuration the maximum width of the seeder 10,or the maximum width of the work, determined by the distance of the second end seeding units 32, can be greater than the wheel gauge of the vehicle, for example about 4.5 metres (though it can also be different from the illustrated example).

When the seeder 10 is not being used and/or is being transported, for example on normal roads, and is being transported along the advancement direction A of the drawing vehicle, the extension bars 25 are brought by the actuator 28 into the raised position (see figures 2,4,6,8 and the broken line of figure 9).

In this configuration the maximum width of the seeder 10, substantially determined by the distance of the first end seeding units 31, is decidedly smaller and, for example, can be smaller than or equal to the wheel gauge of the vehicle, for example about 2.8 metres (though it can also be different from the illustrated example).

The invention as it is conceived is susceptible to numerous modifications, all falling within the scope of the inventive concept.

Further, all the details can be replaced with other technically-equivalent elements.

In practice the materials used, as well as the contingent shapes and dimensions, can be any according to requirements, without forsaking the scope of protection of the following claims.

## Claims

1. A seeder (10) comprising:
- a support bar (20),
- at least a first seeding unit (31) associated to the support bar (20),
- an extension bar (25) of the support bar (20), rotatably associated to the support bar (20) with respect to an oscillating axis (B) and mobile between a raised position, in which it is substantially perpendicular to the support bar (20), and a lowered position in which it is substantially parallel to the support bar (20) so as to axially prolong the support bar, and
- at least a second seeding unit (32) fixed solidly to the extension bar (25) and mobile therewith between the raised position and the lowered position.

2. The seeder (10) of claim 1, wherein the second seeding unit (32) comprises at least an engaging portion (306) able to define a sliding connection with the extension bar (25) and to be blocked in an axial position of the extension bar by means of fixing organs (310).

3. The seeder (10) of claim 2, wherein the engaging portion (306) comprises an attachment flange (308) and a substantially C-shaped rigid tie rod (309) that is adjustably fixed by means of the fixing organs (310) to the attachment flange (308) so as to define a ring-closed profile able to insert on the extension bar (25) and tighten thereon so as to axially block the second seeding unit (32) in a defined axial position of the extension bar (25).

4. The seeder (10) of any one of the preceding claims, wherein the second seeding unit (32) comprises a tank (301) of seeds to be dispensed, substantially sealedly closed by a cover, and a dispensing group (302) of a batched quantity of seeds serving the tank (301).

5. The seeder (10) of claim 4, wherein the second seeding unit (32) comprises a coulter element (303) located upstream of the fall point of the batched quantity of the seed in the advancement direction of the seeder (10) on a terrain to be seeded and/or a closing group (304) of a furrow located downstream of the fall point of the batched quantity of the seed in the advancement direction of the seeder (10) on the seeded terrain.

6. The seeder (10) of claim 4 or 5, wherein the second seeding unit (32) comprises at least a depth wheel (305).

7. The seeder (10) of any one of the preceding claims, **characterised in that** it comprises a pair of the extension bars (25), each prolonging the support bar (20) axially beyond the respective end thereof.

8. The seeder (10) of claim 7, wherein the extension bars (25) are moved alternatively between the lowered position and the raised position by a single actuator (28).

9. The seeder (10) of any one of the preceding claims, wherein the second seeding unit (32) is associated to the extension bar (25) at a projecting portion thereof able to project axially beyond the support bar (20) when the extension bar (25) is in the lowered position.

10. The seeder (10) of any one of the preceding claims, wherein a plurality of first seeding units (31) are solidly fixed to the support bar (20), distanced from one another along the longitudinal axis of the support bar.

11. The seeder (10) of any one of the preceding claims, wherein the oscillating axis (B) of the extension bar (25) is located in an offset position of the support bar (20) in a median zone of the support bar (20) closer to the centre than to the respective end of the support bar prolonged by the prolongation bar (25) in the lowered position thereof.
